# EUROPEAN PATENT SPECIFICATION

(11) **EP 3 552 866 B1**
(45) Date of publication and mention of the grant of the patent: **01.12.2021**
(21) Application number: 19168799.5
(22) Date of filing: 11.04.2019
(51) Int. Cl.: B60L 53/36

(54) **RECHARGE SYSTEM FOR AN ELECTRIC VEHICLE**
AUFLADESYSTEM FÜR EIN ELEKTRISCHES FAHRZEUG
SYSTEME DE RECHARGE POUR UN VEHICULE ELECTRIQUE

(30) Priority: 11.04.2018 IT 201800004408
(43) Date of publication of application: 16.10.2019
(73) Proprietor: Iveco S.p.A., 10156 Torino (IT)
(72) Inventor: AIMO BOOT, Marco, 10072 Caselle Torinese (TO) (IT)
(74) Representative: Faraldi, Marco

(56) References cited:
- WO-A1-2017/209735
- US-A1- 2013 076 902
- US-A1- 2017 008 412

## Description

### TECHNICAL FIELD

The invention relates to a recharge system for an electric vehicle, more in particular to a recharge system of an electric vehicle for the transportation of people, such as a bus.

### KNOWN STATE OF THE ART

The use of low-emission vehicles for the transportation of people is an increasingly felt need due to the greater and greater sensitivity towards environmental issues and to the desired reduction in the use of internal combustion engines.

To this aim, partially or totally electric vehicles are used, which comprise a battery system that periodically needs to be charged.

This battery system can be charged by means of suitable charging systems, for instance an electric cable provided with a suitable DC charging plug, in the yards of public transportation companies; however, due to the numerous variables playing a role in public transportation, such as traffic or the number passengers, which can suddenly change, there is the need to have charging systems comprising charging stations for the electric battery systems located in different points of the area. In this way, bus drivers can charge, when needed, the battery system in the closest charging stations.

There are multiple types of automatic charging stations for bus electric battery systems, which usually comprise a support element or "totem" configured to support an arm with one single degree of freedom and comprising an electric charging element, usually a vertically movable pantograph (on the vehicle side or on the charging infrastructure side), which is designed to be coupled to conductive elements fixed on the roof of the bus so as to allow the latter to be statically charged. The electric charging element is connected to a high-voltage energy source, which allows the battery pack to be charged in a few minutes.

Examples of these charging stations can be Opbrid Busbaar ^{®} or WATT ^{®} system PVI.

The above-mentioned systems are large-sized, have a great impact from the visual point of view in a urban context and, especially, require a fairly precise positioning of the vehicle. Furthermore, pantograph charging means are more exposed to bad weather and, therefore, can more easily be damaged by elements that can surround the station, such as for example tree branches or simply wind.

Furthermore, this solution cannot always ensure, over time, a perfect contact between the two electric poles, since the pantograph contact pads are subjected to wear; furthermore, as already mentioned above, pantographs require a precise transverse positioning of the vehicle.

Examples of charging systems as known in the art are disclosed in documents WO2017209735 A1, US2017008412 A1 or US2013076902 A1.

Hence, there is a strong need for charging systems for bus electric battery systems, which allow the battery systems to be charged in an effective, quick and safe manner and are small-sized.

The object of the invention is to fulfil the needs discussed above in an economic and completely automated manner.

### SUMMARY OF THE INVENTION

The aforesaid object is reached by a means of a recharge system according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a perspective view of part of a recharge station of a recharge system according to the invention in a first operating step;
- figure 2 shows a perspective view of the station of figure 1 in a second operating step;
- figure 3 is a cross-section view of an element of the part of recharge station of figures 1 and 2, in a first operating step;
- figure 4 is a cross section view of the element of figure 3, in a second operating step;
- figures 5, 6 and 7 show different steps of the operation of a recharge system according to the invention; and
- figure 8 is a diagram showing steps of a method to control the recharge system according to the invention.

### DETAILED DESCRIPTION OF THE INVENTION

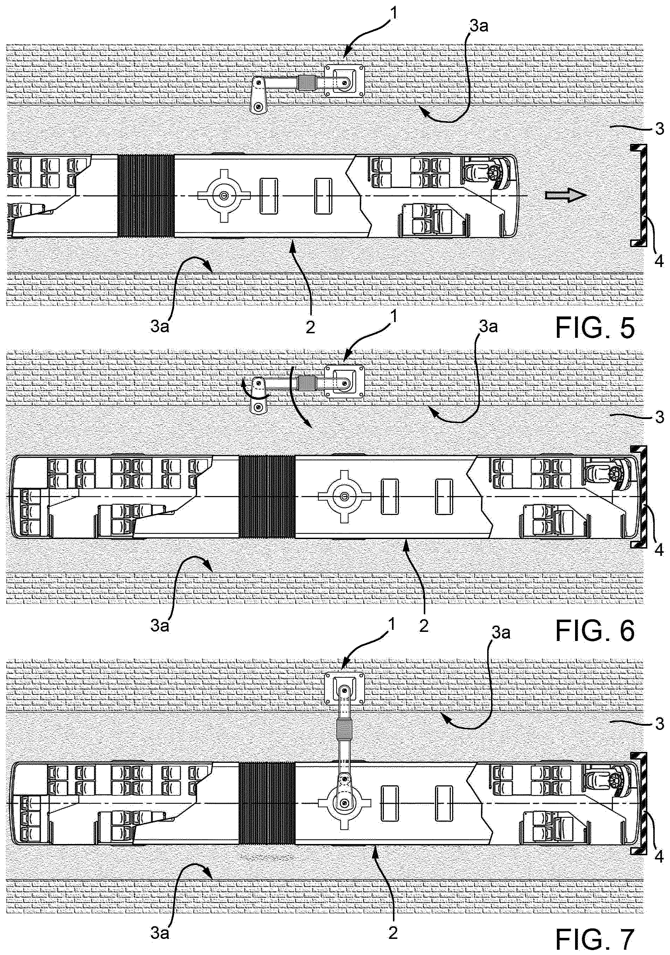

Figures 5 to 7 show a recharge system comprising a recharge station 1 for a bus 2, which is located on one of the edges 3a of a road 3 where the bus 2 drives. The bus 2 can be any bus provided with an electric battery system comprising at least one electric battery designed to store electric energy which can be used to enable the total or partial electric drive of the bus 2.

The road 3 comprises stop means 4 configured to allow the driver of the bus 2 to identify the correct positioning of the latter relative to the recharge station 1 along the road 3. The stop means 4 can advantageously be known stripes painted along the road 3.

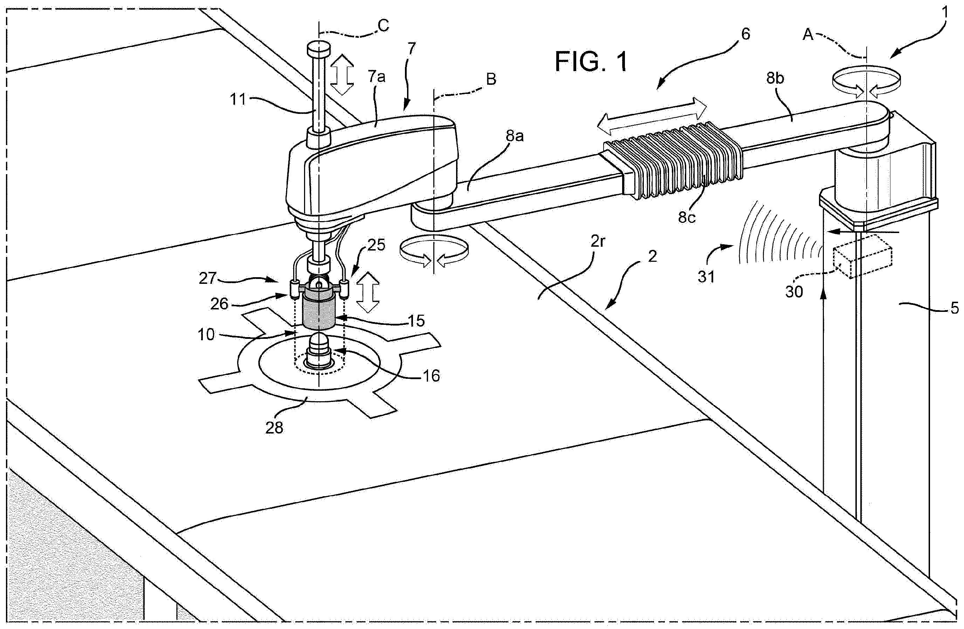

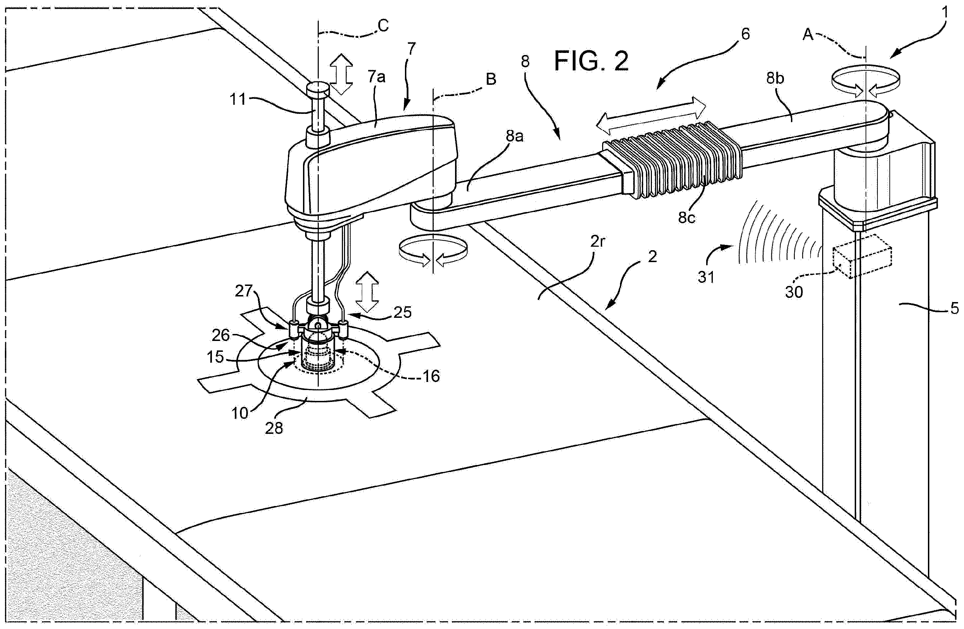

The recharge station 1 comprises (figures 1 and 2) a support element 5, which is fixed, for example by means of fixing means, such as bolts, or hinged along the edge 3a of the road 3, and a mobile arm 6, which is carried by the support element 5. The support element 5 can have any shape, obviously with a greater height than the height of a roof 2r of the bus 2 and defining a longitudinal axis A. The support element 5 preferably is a box-like element with the shape of a prism substantially developing along the longitudinal axis A.

The movable arm 6 preferably comprises an end head 7 and an intermediate element 8 configured to carry the head 7 and connected in a movable manner relative to the support element 5.

The intermediate element 8 is configured in such a way that an end portion 8a carrying the head 7 has at least two degrees of freedom of movement relative to the support element 5. For example, the intermediate element 8 can comprise an element with a longitudinal development, for example a box-like element with shape of a prism, which can be carried in a rotary manner at a further end portion 8b defining a hinge with axis A relative to the support element 5; the intermediate element 8 can further comprise an extendible portion 8c configured to change the longitudinal extension of the intermediate element 8 so that the horizontal distance between the end portion 8a and the end portion 8b can change from a preferable minimum value, equal to at least half the width of the vehicle plus the distance of the vehicle from the hard shoulder, for example 3275 mm, to a maximum value of 4550 mm, more preferably 5550 mm.

The extendible portion 8c can be obtained in a known manner, for example by means of a hydraulic piston or a mechanical device configured to extend, when operated, and covered by an extendible bellows cover 9 in order to allow the extendible portion to extend from the minimum value to the maximum value of the intermediate element 8.

The head 7 comprises a main body 7a provided with electric connection means 10 and carried by the intermediate element 8 so that said connection means 10 have two further degrees of freedom of movement relative to it. In particular, the main body 7a of the head 7 can be carried on the intermediate element 8 in a rotary manner defining a hinge with axis B, parallel to the axis A, relative to the latter and the connection means 10 can slide along an axis C, parallel to the axis B, relative to the main body 7a of the head 7.

This sliding along the axis C can be carried out by means of a rod 11, which carries, at an end of its, the connection means 10, is inserted, in a mobile manner, in a seat obtained in the main body 7a of the head 7 and is operated in a known manner, for example mechanically or hydraulically. Hence, by so doing, the rod 11 can define an upper limit stop, where the connection means define the minimum distance from the main body 7a of the head 7, and a lower limit stop, where the connection means 10 define the maximum distance from the main body 7a of the head 7.

The connection means 10 are configured to allow a high-voltage source (not shown), preferably ranging between 400 and 800 V in direct current, to be connected to the battery system (not shown) of the vehicle 2.

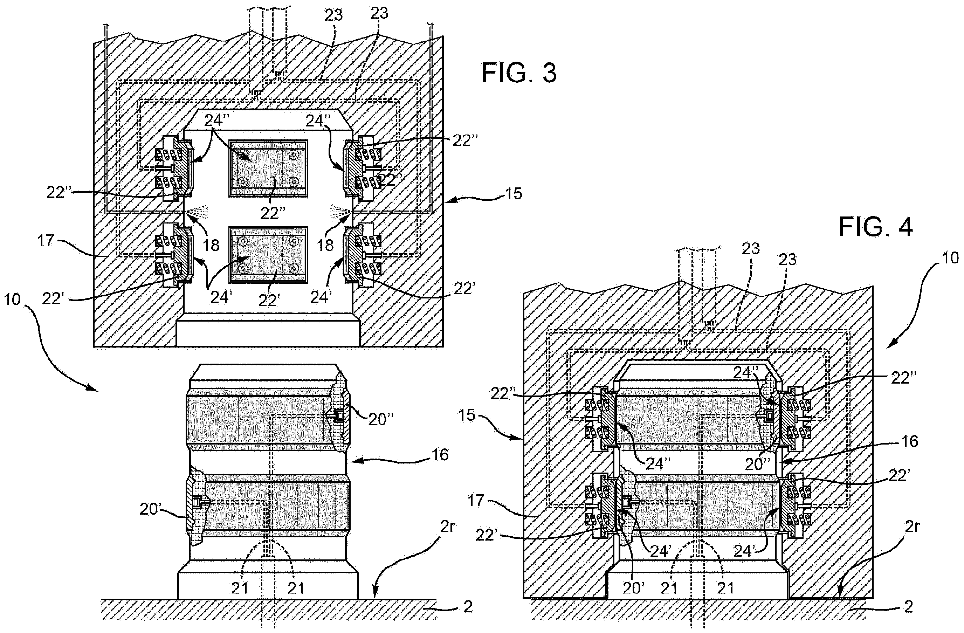

In particular, according to figures 3 and 4, the connection means 10 can comprise a first connection element 15 carried by the head 7 and configured to cooperate with a second connection element 16 carried by the bus 2, preferably on the roof 2r.

In the example described herein, the first connection element 15 comprises a casing 17 with an annular cylindrical shape configured to be fitted around the second connection element 16, which consequently has a substantially cylindrical shape and extends perpendicularly from the roof 2r of the bus 2.

The second connection element 16 can comprise two poles 20', 20'', a positive pole and a negative pole, respectively, possibly configured as rings spaced apart from one another by an electrically insulating material and electrically connected to the battery system of the vehicle by means of respective wires 21.

The first connection element 15 comprises a first and a second contact means 22', 22'' for the poles 20' and 20", respectively, which are configured to selectively come into contact with the respective pole 20', 20" when they are operated.

The contact means 22', 22'' are electrically connected to the high-pressure source by means of respective wires 23 extending inside the head 7, the intermediate element 8 and the support element 5. When they come into contact with the respective pole 20', 20", the contact means 22', 22" allow the high-voltage source to be connected to the battery system of the vehicle 2.

As a consequence of the preferred shape of the poles 20', 20", the contact means 22', 22" can be manufactured as a pair of semicircular walls 24', 24" which are movable relative to the casing 17 between a first non-contact position relative to the second connection element 16 and a second contact position in contact with the poles 20', 20" of the second connection element 16.

The walls 24', 24" are preferably connected in a movable manner to the inner wall of the casing 17 by means of elastic means, for example helical pins, which are configured to define a pre-set contact load when the second connection element 16 is inserted inside the casing 17. Alternatively, the movable parts can be moved by means of linear electromechanical actuators with force-current reaction control. Electronic control means of the recharge station, as described more in detail below, can be configured to control and maintain the force of the contact (acting upon the current control) compensating, when necessary, possible wears and/or thermal expansions arising in case of high current flows.

The connection means 10 can be further provided with cleaning means configured to clean the inside of the casing 17 (when it is not coupled to the second connection element 16) or the connection element 16 itself, when it is coupled. Said cleaning means can comprise compressed air blowers 18, which are fluidically connected to a compressed air source carried, for example, by the recharge station 1, for example through an electric compressor.

The connection means 10 can further comprise localisation means 25 configured to enable an automatic recognition of the relative position of the second connection element 16 carried by the bus 2 relative to the recharge station 1.

The localisation means 25 preferably comprise laser means 26 and RFID means 27 respectively configured to enable the recognition of the environment surrounding the connection means 10, a precise identification, when the vehicle is still, of the position of the second connection element 16 and an unambiguous identification of the bus 2.

In particular, the laser means 26 comprise range finder laser devices configured to capture the distance between their position and a framed objective, for example the roof 2r of the bus 2 or a highlighted area 2u relative to the roof 2r.

The RFID sensors 27 preferably comprise RF antennas and a tag reader, which are configured to capture the position of an RFID tag 28 located close to the second connection element 16.

The recharge station 1 further comprises sensor means (not shown), which are configured to detect impact and/or fire situations.

In particular, the sensor means can comprise acceleration sensors configured to capture sudden changes in the acceleration of the components of the mobile arm 6 and fire sensors located close to the contact means 22', 22'' and configured to capture possible fires caused by a short-circuit between the contact means 22', 22'' and the poles 20', 20".

The recharge station 1 further comprises electronic means 30, for example a known electronic control unit, comprising communication means 31, for example through wireless signals, configured to exchange signals with the bus 2, with the localisation means 25 and with the above-mentioned sensor means.

The electronic means 30 further comprise processing means configured to store and process the aforementioned signals so as to control actuators configured to operate the movements of the mobile arm 6. In particular, according to the embodiment described herein, said actuators operate the movements along and/or around the axes A, B, E, and the extension of the portion 8c, so that the connection means 10 are correctly placed above the second connection element 16.

The electronic means 30 are further configured to control the transfer of electric energy from the high-voltage source to the battery system of the vehicle 2 according to the method described more in detail below.

The electronic means 30 can be connected, through the communication means 31 or, for example, via cable to a remote control station configured to receive signals from a plurality of control stations 1 connected to one another and to send control instructions to the electronic means 30.

The operation of the recharge station 1 according to the invention is the following:
According to figure 3, a bus 2 approaches a recharge station 1. While it approaches the station, the signals sent by the bus 2 are received by the telecommunication means 31 of the electronic means 30 of the recharge station 1, which activates a first step of preliminary controls, as described more in detail below.

In a second operating step, during which the bus 2 is correctly positioned relative to the stop means 4, the electronic means 30, after having received the signals from the localisation means 25 and from the other sensor means and after having processed them accordingly, controls the actuators in such a way that the mobile arm 6 is positioned so that the head 7 is located with the connection means 10 above the second connection element 16. After having identified the correct centring position between the connection means 10 and the second connection element 16, the connection means 10 are coupled to the connection element 16 so that the pairs of walls 24', 24" are in contact, with a correct pre-load, with the respective poles 20', 20".

In a third operating step, when the connection means 10 are coupled to the connection element 16, the electronic means 30 carry out second functional checks before performing the electric recharge, as described more in detail below.

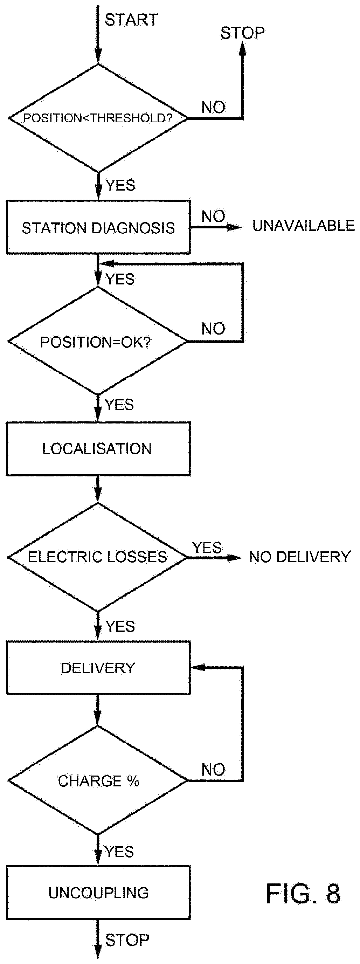

The recharge station 1 is controlled by the electronic means 30 according to the method described below and schematically shown in figure 8.

The bus sends to the electronic means 30 a signal concerning the arrival time and/or the distance from the recharge station 1 and the electronic means 30 evaluate whether said time/distance is greater or smaller than a pre-set time/distance. If so, a step of self-diagnosis the recharge station 1 is activated, otherwise the recharge station 1 waits for a further signal from the bus 2 until the activation of said diagnosis step.

The diagnosis step involves checking the operation of the actuators of the mobile arm 6, checking the connection to the voltage source and the available power, checking the localisation means 25 and the other sensor means and the use of the localisation means 25, in particular of the laser means 26, in order to check for the presence of obstacle elements (e.g. branches) in the range of action of the mobile arm 6, or even measuring the electric insulation of the connection means 22', 22".

When the bus 2 is positioned along the road 3 close to the stop means 4, this item of information is sent to the electronic means 30, for example the bus 2 can communicate the fact that it is in "parking" mode or that the parking brake was activated, which is an essential condition to activate the recharge procedure.

At this point the step of locating the connection element 16 of the bus 2 can start. This localisation is carried out by the localisation means 25, which are configured to acquire the position of the mobile arm 6 in the environment and the distance between the head 7 of the latter and the connection element 16. These items of information are acquired in real time by the electronic means 30, which are configured to process these items of information so as to control the actuators of the mobile arm 6 in such a way that the electric connection means 10 are mechanically coupled to the connection element 16.

Once the connection means 10 are coupled to the connection element 16, the electronic means 30 start an electric contact diagnosis step, during which the electric resistance between the poles and between each pole and the ground is measured by means of the contact means 20', 20". This measure provides an estimation of possible current dispersions and the energization of the contact means 20', 20" is inhibited in case these electric dispersions are detected.

When the diagnosis step produces a positive result, the electronic means 30 enable the connection between the high-voltage source and the battery system of the vehicle 2 by energizing the contact means 22', 22", which are in contact with the poles 20', 20", which, in turn, are connected to the battery system, which is charged.

This step of charging the battery system of the vehicle 2 can be interrupted when the driver decides to disconnect the recharge through a suitable signal to be sent to the recharge station 1, when a pre-set percentage, for example a 100% charge, is reached or after a pre-set charging time defined based on the minimum time of stay of the vehicle 22 in charge. The battery control unit (BMS) of the vehicle 2 can further transfer, through the communication means 31, to the electronic means 30 of the recharge station 1 a series of parameters useful for the management of the fleet of vehicles using said station 1. The transfer of data is completed before the mobile arm 6 goes back to its initial position, therefore without affecting the total charging times.

At the end of this step, the electronic means 30 control the actuators of the arm 6 so as to uncouple the connection means 10 from the second connection element 16 of the vehicle 2 and go back to an initial rest position.

Safety checks are carried out in parallel to the recharge step of the method for controlling the recharge station 1 described above.

A first parallel check involves checking whether the vehicle 2 is about to hit a mobile element. In this case, the acceleration sensor means of the mobile arm 6 transmit an acceleration signal to the electronic means 30, which evaluate whether it exceeds a pre-set acceleration threshold value and inhibit the connection between the voltage source and the contact means 20', 20" accordingly.

A second parallel check is a fire check due, for example, to a sudden short circuit in the connection means 10. The fire sensors evaluate a possible fire ignition and transmit an acceleration signal to the electronic means 30, which, in turn, evaluate whether to inhibit the connection between the voltage source and the contact means 20', 20" accordingly.

During the connection and disconnection step carried out to connect and disconnect the connection means 10 there can be an intermediate cleaning step to clean the first and the second connection element 15, 16. In this case, the electronic means 30 activate the blowers so as to enable the delivery of compressed air on the poles 20', 20" and the contact means 22', 22".

After the charge of the battery system of the vehicle 2 has been completed, the electronic means 30 are further configured to store data concerning the use of the elements of the recharge station, so as to build a history of the uses of each element.

In particular, it is possible to store the number and the duration of the manoeuvres of each actuator of the mobile arm, the number of cleaning cycles of the first and/or second connection element 15, 16, statistics concerning the presence of obstacles in the range of action of the arm 6, the number and the type of faults, the count of the charging energy, the hours of activity and inactivity of the recharge station 1, the identification code and the number of the vehicles 2 charged and the number of emergencies identified (hits/fires).

The electronic means 30, periodically or when remotely requested to do so, can transmit the data stored to the remote management unit.

Owing to the above, the advantages of a recharge system according to the invention are evident.

The recharge station 1 is small-sized and has a small impact from the visual point of view.

The connection means 10 ensure a precise coupling between bus 2 and recharge station 1. Furthermore, the localisation means 25 enable, besides the recognition of elements hindering the movement of the mobile arm 6, the precise recognition of the second connection element 16. In this way, the recharge station 1 can be used for different types of buses having the connection element 16 placed in different points.

Moreover, this precise positioning allows users to avoid stop elements such as barriers and/or retractable columns, which are retractable relative to the road surface, configured to be activated when the recharge station 1 identifies the presence of the bus 2, with consequent savings. Therefore, for the same reason, there is no need for an automatic or assisted alignment of the vehicle (the driver is supported by the system that detects the recharge area), which typically require suitable sensors on the side of the vehicle (video cameras and/or radars).

The fact that the connection elements 15, 16 are mechanically coupled to one another by means of a male-female shape coupling ensures a precise coupling, which is also reliable over time. This precision and reliability is further increased by the use of contact means 22', 22" for the poles 20', 20" with a pre-set load or an active control of the contact force.

The presence of cleaning means for the connection elements 15, 16 prevents impurities and/or dirt (for example small branches, waste, dust or any other foreign element) from jeopardizing the electric-mechanical contact between them. The use of the range-finder laser technology, combined with the use of RFID means, allows the connection element 16 to be located in a precise and accurate manner and enables a recognition of the type of vehicle 2 of the vehicle 2 itself.

The use of fire/acceleration sensors increases the safety of the recharge station during the transfer of energy from the voltage source to the battery system of the vehicle.

The use of the electronic means 30 allows for an automatic control, for example according to the method described herein, of the recharge station 1. These means can further communicate with the vehicles in circulation, with other recharge stations and store data useful for the maintenance/periodic replacement of elements of the recharge station.

A network comprising different recharge stations 1 can globally be controlled by means of a remote unit connected to each electronic means 30.

Finally, the recharge system according to the invention can be subjected to changes and variants, within the scope of the invention as defined by the appended claims.

## Claims

1. A recharge system for a battery system for a vehicle (2), said recharge system comprising a recharge station (1) comprising a support element (5) and a mobile arm (6) carried by said support element (5), said mobile arm (6) comprising an end element (7) and an intermediate connection element (8), said intermediate element (8) being carried by said support element (5) so that said end element (7) can move with at least two degrees of freedom in respect to said support element (5), said end element (7) comprising electric connection means (10) carried by said end element (7) so that said electric connection means (10) can move with at least two degrees of freedom in respect to said end element (7), said electric connection means (10) being configured to be coupled with an electric connection element (16) carried by said vehicle (2) so as to enable the charging of said battery system, **characterised in that** said intermediate element (8) comprises a first end (8b) hinged in respect to said support element (5) and comprises a portion configured (8c) such that it enables to change the distance between said first end (8b) and a second end (8a) of said intermediate element (8) and wherein said end element (7) is hinged in respect to an end portion (8a) of said intermediate element (8) and said electric connection means (10) are carried by said end element (7) by means of handling means (11) configured to at least vary the distance of said electric connection means (10) in respect to said end element (7) between a minimum and a maximum distance.

2. The recharge system according to claim 1, **characterised in that** said electric connection means (10) comprise a connection element (15) configured to electrically and mechanically cooperate with said connection element (16) carried by said vehicle (2).

3. The recharge system according to claim 2, **characterised in that** one of said connection elements (15, 16) comprises a projection configured to be inserted within a casing (17) carried by the other of said connection elements (15, 16).

4. The recharge system according to the claim 2 or 3, **characterised in that** one of said connection elements (15, 16) comprises at least one pair of electric poles (20', 20") configured to cooperate with respective electric contact means (22', 22") carried by the other of said connection elements (15, 16).

5. The recharge system according to claim 4, **characterised in that** said electric contact means (22', 22") comprise respective walls (24' 24") configured to be mechanically coupled in contact with said electric poles (20', 20"), said contact being achieved with a pre-set contact force.

6. The recharge system according to the claim 4 or 5, **characterised in that** said electric connection means (10) comprise cleaning means, said cleaning means being configured, in a first operational status in which said electric connection means (10) do not cooperate with said connection element (16) carried by said vehicle (2), to clean said contact means (20', 20") and, in a second operational status in which said electric connection means (10) cooperate with said connection element (16) carried by said vehicle (2), being configured to clean said connection element (16) .

7. The recharge system according to claim 6, **characterised in that** said cleaning means comprise compressed air blowers.

8. The recharge system according to any one of the previous claims **characterised in that** said recharge station (1) comprises localisation means (25) configured to enable the recognition of the position in relation to the connection element (16) carried by said vehicle (2) in respect to said end element (7).

9. The recharge system according to claim 8, **characterised in that** said sensor means (25) comprise laser means (26) and RFID means (27), said RFID means (27), being configured to cooperate with respective means (28) carried by said vehicle (2).

10. The recharge system according to any one of the previous claims **characterised in that** said recharge station (1) comprises sensor means configured to detect an acceleration of the components of said mobile arm (6).

11. The recharge system according to any one of the previous claims **characterised in that** said recharge station (1) comprises sensor means configured to detect a start of a fire.

12. The recharge system according to any one of the previous claims **characterised in that** said recharge station (1) comprises actuation means configured to enable the relative movements of said components (6, 7, 8, 10) of said recharge station (1) and electronic means (30) configured to receive as inputs, signals received by said sensor means (25) and/or said vehicle (2), process said signals and consequently control said actuation means.

13. The recharge system according to claim 12, **characterised in that** it comprises a plurality of recharge stations (1), the electronic means (30) of each of said recharge stations (1) being electronically connected with a remote management unit.

## Patentansprüche

1. Ladesystem für ein Batteriesystem für ein Fahrzeug (2), wobei das Ladesystem eine Ladestation (1) umfasst, die ein Trägerelement (5) und einen mobilen Arm (6) umfasst, der von dem Trägerelement (5) getragen wird, wobei der mobile Arm (6) ein Endelement (7) und ein Zwischenverbindungselement (8) umfasst, wobei das Zwischenelement (8) von dem Trägerelement (5) getragen wird, derart, dass sich das Endelement (7) mit mindestens zwei Freiheitsgraden in Bezug auf das Trägerelement (5) bewegen kann, wobei das Endelement (7) elektrische Verbindungsmittel (10) umfasst, die von dem Endelement (7) getragen werden, derart, dass sich die elektrischen Verbindungsmittel (10) mit mindestens zwei Freiheitsgraden in Bezug auf das Endelement (7) bewegen können, wobei die elektrischen Verbindungsmittel (10) ausgeführt sind, um mit einem elektrischen Verbindungselement (16) des Fahrzeugs (2) zu koppeln, um das Laden des Batteriesystems zu ermöglichen,
**dadurch gekennzeichnet, dass** das Zwischenelement (8) ein erstes Ende (8b) umfasst, das in Bezug auf das Trägerelement (5) angelenkt ist, und einen Abschnitt (8c) umfasst, der derart ausgeführt ist, dass er es ermöglicht, den Abstand zwischen dem ersten Ende (8b) und einem zweiten Ende (8a) des Zwischenelements (8) zu verändern, und wobei das Endelement (7) in Bezug auf einen Endabschnitt (8a) des Zwischenelements (8) angelenkt ist und die elektrischen Verbindungsmittel (10) von dem Endelement (7) mittels Handhabungsmitteln (11) getragen werden, die so ausgeführt sind, dass sie zumindest den Abstand der elektrischen Verbindungsmittel (10) in Bezug auf das Endelement (7) zwischen einem minimalen und einem maximalen Abstand variieren.

2. Ladesystem nach Anspruch 1, **dadurch gekennzeichnet, dass** die elektrischen Verbindungsmittel (10) ein Verbindungselement (15) umfassen, das ausgeführt ist, um mechanisch und elektrisch mit dem Verbindungselement (16) zusammenzuwirken, das vom Fahrzeug (2) getragen wird.

3. Ladesystem nach Anspruch 2, **dadurch gekennzeichnet, dass** eines der Verbindungsmittel (15,16) einen Vorsprung umfasst, der so ausgeführt ist, dass er in ein Gehäuse (17) eingeführt werden kann, das von dem anderen der Verbindungselemente (15, 16) getragen wird.

4. Ladesystem nach Anspruch 2 oder 3, **dadurch gekennzeichnet, dass** eines der Verbindungselemente (15, 16) zumindest ein Paar elektrischer Pole (20', 20") umfasst, die ausgeführt sind, um mit entsprechenden elektrischen Kontaktmitteln (22', 22") zusammenzuwirken, die von dem anderen der Verbindungselemente (15, 16) getragen werden.

5. Ladesystem nach Anspruch 4, **dadurch gekennzeichnet, dass** die elektrischen Kontaktmittel (22', 22") entsprechende Wände (24', 24") umfassen, die so ausgeführt sind, dass sie mechanisch in Kontakt mit den elektrischen Polen (20', 20") gekoppelt werden, wobei der Kontakt mit einer voreingestellten Kontaktkraft erreicht wird.

6. Ladesystem nach Anspruch 4 oder 5, **dadurch gekennzeichnet, dass** die elektrischen Anschlussmittel (10) Reinigungsmittel umfassen, wobei die Reinigungsmittel dazu ausgeführt sind, in einem ersten Betriebszustand, in dem die elektrischen Anschlussmittel (10) nicht mit dem von dem Fahrzeug (2) getragenen Anschlusselement (16) zusammenwirken, die Kontaktmittel (20', 20") zu reinigen und in einem zweiten Betriebszustand, in dem die elektrischen Anschlussmittel (10) mit dem von dem Fahrzeug (2) getragenen Anschlusselement (16) zusammenwirken, das Anschlusselement (16) zu reinigen.

7. Ladesystem nach Anspruch 6, **dadurch gekennzeichnet, dass** die Reinigungsmittel Druckluftgebläse umfassen.

8. Ladesystem nach einem der vorhergehenden Ansprüche, **dadurch gekennzeichnet, dass** die Ladestation (1) Lokalisierungsmittel (25) umfasst, die ausgeführt sind, um die Erkennung der Position in Bezug auf das von dem Fahrzeug (2) getragene Verbindungselement (16) in Bezug auf das Endelement (7) zu ermöglichen.

9. Ladesystem nach Anspruch 8, **dadurch gekennzeichnet, dass** die Lokalisierungsmittel (25) Lasermittel (26) und RFID-Mittel (27) umfassen, wobei die RFID-Mittel (27) so ausgeführt sind, dass sie mit entsprechenden Mitteln (28), die von dem Fahrzeug (2) getragen werden, zusammenwirken.

10. Ladesystem nach einem der vorhergehenden Ansprüche, **dadurch gekennzeichnet, dass** die Ladestation (1) Sensormittel umfasst, die ausgeführt sind, um eine Beschleunigung der Komponenten des mobilen Arms (6) zu erfassen.

11. Ladesystem nach einem der vorhergehenden Ansprüche, **dadurch gekennzeichnet, dass** die Ladestation (1) Sensormittel umfasst, die ausgeführt sind, um den Ausbruch eines Brandes zu erfassen.

12. Ladesystem nach einem der vorhergehenden Ansprüche, **dadurch gekennzeichnet, dass** die Ladestation (1) Betätigungsmittel umfasst, die so ausgeführt sind, dass sie die relativen Bewegungen der Komponenten (6, 7, 8, 10) der Ladestation (1) ermöglichen, sowie elektronische Mittel (30), die so ausgeführt sind, dass sie die von den Sensormitteln (25) und/oder dem Fahrzeug (2) empfangenen Signale als Eingaben empfangen, die Signale verarbeiten und nachfolgend die Betätigungsmittel steuern.

13. Ladesystem nach Anspruch 12, **dadurch gekennzeichnet, dass** es eine Vielzahl von Ladestationen (1) umfasst, wobei die elektronischen Mittel (30) jeder dieser Ladestationen (1) elektronisch mit einer Fernverwaltungseinheit verbunden sind.

## Revendications

1. Système de recharge pour un système de batterie pour un véhicule (2), ledit système de recharge comprenant une station de recharge (1) comprenant un élément de support (5) et un bras mobile (6) porté par ledit élément de support (5), ledit bras mobile (6) comprenant un élément d'extrémité (7) et un élément de raccordement intermédiaire (8), ledit élément intermédiaire (8) étant porté par ledit élément de support (5) de sorte que ledit élément d'extrémité (7) peut se déplacer avec au moins deux degrés de liberté par rapport audit élément de support (5), ledit élément d'extrémité (7) comprenant des moyens de raccordement électriques (10) portés par ledit élément d'extrémité (7) de sorte que lesdits moyens de raccordement électriques (10) peuvent se déplacer avec au moins deux degrés de liberté par rapport audit élément d'extrémité (7), lesdits moyens de raccordement électriques (10) étant configurés pour être couplés avec un élément de raccordement électrique (16) porté par ledit véhicule (2) afin de permettre de charger ledit système de batterie,
**caractérisé en ce que** :
ledit élément intermédiaire (8) comprend une première extrémité (8b) articulée par rapport audit élément de support (5) et comprend une partie configurée (8c) de sorte qu'elle permet de modifier la distance entre ladite première extrémité (8b) et une seconde extrémité (8a) dudit élément intermédiaire (8), et
dans lequel ledit élément d'extrémité (7) est articulé par rapport à la une partie d'extrémité (8a) dudit élément intermédiaire (8) et lesdits moyens de raccordement électriques (10) sont portés par ledit élément d'extrémité (7) au moyen de moyens de manipulation (11) configurés pour modifier au moins la distance desdits moyens de raccordement électriques (10) par rapport audit élément d'extrémité (7) entre une distance minimum et une distance maximum.

2. Dispositif de recharge selon la revendication 1, **caractérisé en ce que** lesdits moyens de raccordement électriques (10) comprennent un élément de raccordement (15) configuré pour coopérer électriquement et mécaniquement avec ledit élément de raccordement (16) porté par ledit véhicule (2).

3. Dispositif de recharge selon la revendication 2, **caractérisé en ce que** l'un desdits éléments de raccordement (15, 16) comprend une saillie configurée pour être insérée dans un boîtier (17) porté par l'autre desdits éléments de raccordement (15, 16).

4. Dispositif de recharge selon la revendication 2 ou 3, **caractérisé en ce que** l'un desdits éléments de raccordement (15, 16) comprend au moins une paire de pôles électriques (20', 20") configurés pour coopérer avec des moyens de contact électriques (22', 22") respectifs portés par l'autre desdits éléments de raccordement (15, 16).

5. Dispositif de recharge selon la revendication 4, **caractérisé en ce que** lesdits moyens de contact électriques (22', 22") comprennent des parois (24', 24") respectives configurées pour être mécaniquement couplées en contact avec lesdits pôles électriques (20', 20"), ledit contact étant obtenu avec une force de contact prédéterminée.

6. Dispositif de recharge selon la revendication 4 ou 5, **caractérisé en ce que** lesdits moyens de raccordement électriques (10) comprennent des moyens de nettoyage, lesdits moyens de nettoyage étant configurés, dans un premier état de fonctionnement dans lequel lesdits moyens de raccordement électriques (10) ne coopèrent pas avec ledit élément de raccordement (16) porté par ledit véhicule (2), pour nettoyer lesdits moyens de contact (20', 20") et, dans un second état opérationnel dans lequel lesdits moyens de raccordement électriques (10) coopèrent avec ledit élément de raccordement (16) porté par ledit véhicule (2), étant configurés pour nettoyer ledit élément de raccordement (16).

7. Dispositif de recharge selon la revendication 6, **caractérisé en ce que** lesdits moyens de nettoyage comprennent des soufflantes d'air comprimé.

8. Dispositif de recharge selon l'une quelconque des revendications précédentes, **caractérisé en ce que** ladite station de recharge (1) comprend des moyens de positionnement (25) configurés pour permettre la reconnaissance de la position par rapport à l'élément de raccordement (16) porté par ledit véhicule (2) par rapport audit élément d'extrémité (7).

9. Dispositif de recharge selon la revendication 8, **caractérisé en ce que** lesdits moyens de capteur (25) comprennent des moyens de laser (26) et des moyens de RFID (27), lesdits moyens de RFID (27) étant configurés pour coopérer avec des moyens (28) respectifs portés par ledit véhicule (2).

10. Dispositif de recharge selon l'une quelconque des revendications précédentes, **caractérisé en ce que** ladite station de recharge (1) comprend des moyens de capteur configurés pour détecter une accélération des composants dudit bras mobile (6).

11. Dispositif de recharge selon l'une quelconque des revendications précédentes, **caractérisé en ce que** ladite station de recharge (1) comprend des moyens de capteur configurés pour détecter un départ de feu.

12. Dispositif de recharge selon l'une quelconque des revendications précédentes, **caractérisé en ce que** ladite station de recharge (1) comprend des moyens d'actionnement configurés pour permettre les mouvements relatifs desdits composants (6, 7, 8, 10) de ladite station de recharge (1) et des moyens électriques (30) configurés pour recevoir en tant qu'entrées, des signaux reçus par lesdits moyens de capteur (25) et/ou ledit véhicule (2), traiter lesdits signaux et par conséquent commander lesdits moyens d'actionnement.

13. Dispositif de recharge selon la revendication 12, **caractérisé en ce qu'**il comprend une pluralité de stations de recharge (1), les moyens électroniques (30) de chacune desdites stations de recharge (1) étant électroniquement raccordés avec une unité de gestion à distance.
